# EUROPÄISCHE PATENTSCHRIFT

(11) **EP 2 986 955 B1**
(45) Veröffentlichungstag und Bekanntmachung des Hinweises auf die Patenterteilung: **07.12.2016**
(21) Anmeldenummer: 14708479.2
(22) Anmeldetag: 04.03.2014
(51) Int. Cl.: G01G 7/02

(54) **MONOLITHISCHES WÄGESYSTEM**
MONOLITHIC WEIGHING SYSTEM
SYSTÈME DE PESÉE MONOLITHIQUE

(30) Priorität: 16.04.2013 DE 102013103791
(43) Veröffentlichungstag der Anmeldung: 24.02.2016
(73) Patentinhaber: Sartorius Lab Instruments GmbH & Co. KG, 37079 Göttingen (DE)
(72) Erfinder: GRAF, Winfried, 37127 Niemetal (DE)
(86) Internationale Anmeldenummer: PCT/EP2014/000540
(87) Internationale Veröffentlichungsnummer: WO 2014/169981

(56) Entgegenhaltungen:
- WO-A1-2004/111583
- DE-A1- 3 743 073

## Beschreibung

### Gebiet der Erfindung

Die Erfindung betrifft ein monolithisches Wägesystem, umfassend eine Basis, eine über eine Parallellenkeranordnung an der Basis angelenkte Lastaufnahme und ein an der Lastaufnahme angelenkter Hebel, welche eine Ansatzstelle für eine Kraftkompensationsanordnung und einen Targetbereich für einen optischen Lagesensor aufweist, wobei der Targetbereich eine Schlitzblende in einem dünnwandigen Hebelabschnitt des Hebels in dessen Auslenkungsebene aufweist.

Die Erfindung betrifft weiter eine Wägevorrichtung, umfassend ein derartiges monolithisches Wägesystem.

### Stand der Technik

Monolithische Wägesysteme als Kernelement von Wägevorrichtungen sind dem Fachmann von Präzisionswaagen, insbesondere von nach dem Prinzip der elektromagnetischen Kraftkompensation arbeitenden Präzisionswaagen her bekannt. Solche Wägesysteme weisen eine Lastaufnahme auf, die mittels einer Parallellenkeranordnung an einer Basis angelenkt ist. In der resultierenden Präzisionswaage ist die Lastaufnahme mit einer zu wägende Proben aufnehmenden Waagschale verbunden, während die Basis festgelegt ist. Die Lastaufnahme vermag aufgrund der Parallellenkeranordnung - zumindest bei kleinen Auslenkungen - eine rein vertikale Bewegung auszuführen. An die Lastaufnahme ist eine Hebelanordnung zur Übersetzung der Auslenkung der Lastaufnahme angelenkt. An der Hebelanordnung ist eine Ansatzstelle für eine Kraftkompensationsanordnung, beispielsweise eine elektromagnetische Tauchspulenanordnung vorgesehen. Die Kraftkompensationsanordnung dient zur Erzeugung einer auf die Hebelanordnung wirkenden Gegenkraft, die die durch die auf die Lastaufnahme wirkende Gewichtskraft erzeugte Auslenkung der Hebelanordnung kompensiert. Im Fall der Ausgestaltung der Kraftkompensationsanordnung als elektromagnetische Tauchspulenanordnung muss hierzu ein Strom durch die Tauchspule geregelt werden. Der entsprechende Regelkreis enthält einen optischen Lagesensor, der die Auslenkungen der Hebelanordnung präzise detektiert und der Regelelektronik ein entsprechendes Signal zur Verfügung stellt, sodass eine unverzügliche Kompensation erfolgen kann. Dadurch wird erreicht, dass die tatsächlichen Auslenkungen der Hebelanordnung minimiert werden können. Man spricht zum Teil von "wegfreier" Kraftkompensation.

Die Empfindlichkeit des Lagesensors ist essentiell für die Präzision der Wägung. Bei am Markt befindlichen Wägesystemen weist die Hebelanordnung in einem dünnwandig ausgebildeten Hebelabschnitt, der einer vergleichsweise großen Auslenkung unterliegt, in der Auslenkungsebene eine Schlitzblende auf, die von einem optischen Sensor beobachtet wird. Insbesondere hat es sich bewährt, eine Schlitzblende des dünnwandigen Hebelabschnittes zwischen einem Fotoemitter und einem Fotodetektor anzuordnen, sodass Licht des Fotoemitters auf seinem Weg zum Fotodetektor die Schlitzblende durchstrahlt. Bei geeigneter Ausgestaltung des Fotodetektors, beispielsweise als geteilte Fotodiode, können Auslenkungen des die Schlitzblende tragenden Hebelabschnittes sehr präzise registriert werden. Hierzu werden beidseitig des Targetbereichs, d.h. der Schlitzblende, Sockel zur Halterung von Fotoemitter und Fotodetektor benötigt.

Aus der DE 37 43 073 A1 ist eine Waage bekannt, bei der Sender und Empfänger des optischen Lagesensors innerhalb des Magnetdeckels untergebracht sind. Aus der US 3,805,907 ist weiterhin ein optischer Nullindikator für eine Waage bekannt, bei dem die lichtempfindlichen Flächen zur Justierung um die optische Achse des Empfängers schwenkbar sind.

Aus Gründen der mechanischen Präzision und Reproduzierbarkeit werden derartige Wägesysteme soweit wie möglich monolithisch hergestellt, d.h. aus einem einheitlichen Materialblock, beispielsweise aus Aluminium herausgearbeitet. Bei den oben genannten bekannten Wägesystemen werden jedoch die Sockel zur Halterung des Lagesensors separat gefertigt und nachträglich an der Basis angeschraubt. Aus Präzisionsgründen muss nämlich der Lagesensor sehr nahe am Targetbereich positioniert sein. Die resultierende räumliche Enge erlaubt jedoch keine Herausarbeitung der Schlitzblende des Targetbereichs mit den für die Schaffung des übrigen Monolithen verwendeten Fräs- und Bohrwerkzeugen. Andererseits wäre jedoch die monolithische Anbindung der Lagesensorsockel von besonderer Bedeutung hinsichtlich der im Wägebereich stets angestrebten Steigerung von Auflösung und Reproduzierbarkeit. Durch die beschränkte Reproduzierbarkeit der mit den bisherigen Fertigungsmethoden erreichbaren Relativlage der Lagesensorsockel zur Schlitzblende treten nämlich Montageungenauigkeiten und -effekte, wie z.B. Temperatureffekte an Anschraubungen auf.

### Aufgabenstellung

Es ist die Aufgabe der vorliegenden Erfindung, ein verbessertes Wägesystem mit monolithischen angebundenen Lagesensorsockeln zur Verfügung zu stellen.

### Darlegung der Erfindung

Diese Aufgabe wird in Verbindung mit den Merkmalen des Oberbegriffs von Anspruch 1 dadurch gelöst, dass dem Targetbereich benachbart ein einstückig mit der Basis verbundener Sockel angeordnet ist, der mit einer senkrecht zur Auslenkungsebene ausgerichteten Sockeldurchbrechung versehen ist, wobei die Schlitzblende des Targetbereichs mittels Laserbearbeitung durch die Sockeldurchbrechung hindurch geschaffen ist.

Bevorzugte Ausführungsformen der Erfindung sind Gegenstand der abhängigen Ansprüche.

Zunächst sieht die Erfindung vor, den wenigstens einen benötigten Sockel zur Halterung des Lagesensors ohne Betrachtung der oben erläuterten, resultierenden Probleme monolithisch mit dem übrigen Wägesystem auszuarbeiten und insbesondere an der Basis anzuordnen. Gemäß einem weiteren wesentlichen Merkmal der Erfindung, wird dieser Sockel mit einer Sockeldurchbrechung versehen, die zwei Aufgaben erfüllen kann. Zum einen kann sie der Halterung des Lagesensors dienen. Dies ist auch bei den bekannten, separat gefertigten und angeschraubten Sockeln der Fall. Insbesondere können die Durchbrechungen der Form des Lagesensors angepasst sein, sodass dessen Einsetzen in den oder die Sockel formschlüssig mit höchster Reproduzierbarkeit erfolgt. Erfindungsgemäß wird der Sockeldurchbrechung jedoch eine weitere Aufgabe zugewiesen, nämlich als Bearbeitungsfenster für eine Laserbearbeitung des Targetbereichs, insbesondere für eine Herausarbeitung der Schlitzblende mittels Laserlicht. Auf diese Weise wird das Problem der zu großen räumlichen Enge für eine mechanische Bearbeitung des Targetbereichs gelöst. In einem ersten Herstellungsschritt wird also das Wägesystem einschließlich des bzw. der Sockel mit Sockeldurchbrechung auf herkömmliche Weise monolithisch aus einem Materialblock herausgearbeitet. In einem zweiten Bearbeitungsschritt wird sodann die Schlitzblende des Targetbereichs durch die Sockeldurchbrechung hindurch mittels Laserbearbeitung herausgearbeitet. In einem anschließenden Arbeitsschritt kann eine Wägevorrichtung geschaffen werden, indem das monolithische Wägesystem mit Lagesensor und Kraftkompensationsanordnung ausgestattet wird. Eine derartige Wägeanordnung kann alsdann durch Hinzufügung von Waagschalen, Elektronik und Gehäuse zu einer einsatzbereiten Präzisionswaage erweitert werden.

Typischerweise befindet sich der Targetbereich der Hebelanordnung etwa in der Mitte der Gesamthöhe des Wägesystems. Das obere Lenkerpaar der Parallellenkeranordnung ist typischerweise weiter oben, das untere Lenkerpaar der Parallellenkeranordnung weiter unten positioniert. Da sowohl das obere wie auch das untere Lenkerpaar an der Basis angelenkt ist, liegt der Targetbereich und der oder die Sockel somit zwischen zwei sich über die Höhe des Wägesystems erstreckenden Wandungen der Basis. Auch diese können die Bearbeitung des Targetbereichs sowie des oder der Sockel behindern.

Bei einer Weiterbildung der Erfindung ist daher vorgesehen, dass benachbart zu dem die Sockeldurchbrechung tragenden Sockel eine Wandung der Basis angeordnet ist, welche eine die Sockeldurchbrechung überlappende Basisdurchbrechung aufweist, wobei die Schlitzblende des Targetbereichs mittels Laserbearbeitung durch die Basisdurchbrechung hindurch geschaffen ist. Mit anderen Worten wird die Idee der Laserbearbeitung durch ein Bearbeitungsfenster hindurch auch auf die Wandung der Basis übertragen. Allerdings kann die Basisdurchbrechung auch als Zugang für eine mechanische Bearbeitung des Sockels verwendet werden. Insbesondere können die Basisdurchbrechung und die Sockeldurchbrechung in einem gemeinsamen Bohrvorgang geschaffen werden. Der entstehende Kanal bildet danach den Zugang für die Laserbearbeitung des Targetbereichs.

Zwar gibt es viele Möglichkeiten zur Ausbildung eines optischen Lagesensors, einschließlich der Anordnung eines bildgebenden Detektors auf nur einem Sockel. Wirtschaftlich sinnvoller und mindestens ebenso präzise ist jedoch die oben bereits erläuterte Verwendung eines Fotoemitters und eines Fotodetektors auf beiden Seiten eines Targetbereichs mit einer Schlitzblende.

Bei einer Weiterbildung der Erfindung ist daher vorgesehen, dass beidseitig des Targetbereichs je ein Sockel mit einer Sockeldurchbrechung angeordnet ist und die Sockeldurchbrechungen und der Targetbereich miteinander fluchten. Für den oben bereits erläuterten Fall der die mechanische und optische Bearbeitung der Sockel bzw. des Targetbereichs behindernden Wandungen der Basis führt dies zu der bevorzugten Ausgestaltung, wonach die Sockel zwischen zwei Wandungen der Basis angeordnet sind, welche jeweils eine die nächstliegende Sockeldurchbrechung überlappende Basisdurchbrechung aufweisen.

Eine große Bedeutung für die Empfindlichkeit des Lagesensors hat auch die geometrische Form der Schlitzblende. Zur Vermeidung von Reflexionen an den Kanten der Schlitzblende und damit von Streulicht hinter der Schlitzblende, welches zu einer Verringerung der Empfindlichkeit des Lagesensors führen würde, werden möglichst scharfe Kanten an den Rändern der Schlitzblende angestrebt. Diese werden bevorzugt erzeugt, indem die Schlitzblende entweder sehr dünn, etwa als sehr dünnes Blech, oder keilförmig, sich in Richtung zum Fotodetektor hin verjüngend ausgeführt ist. Eine bevorzugte Schlitzbreite der Schlitzblende liegt bei etwa 0,3 bis 0,5 mm.

Weitere Merkmale und Vorteile der Erfindung ergeben sich aus der nachfolgenden speziellen Beschreibung und den Zeichnungen.

### Kurzbeschreibung der Zeichnungen

Es zeigen:
- Figur 1:: eine perspektivische Darstellung eines erfindungsgemäßen Wägesystems,
- Figur 2:: eine Seitenansicht des Wägesystems von Figur 1,
- Figur 3:: eine perspektivische Darstellung einer erfindungsgemäßen Wägevorrichtung.

### Beschreibung bevorzugter Ausführungsformen

Gleiche Bezugszeichen in den Figuren deuten auf gleiche oder analoge Elemente hin.

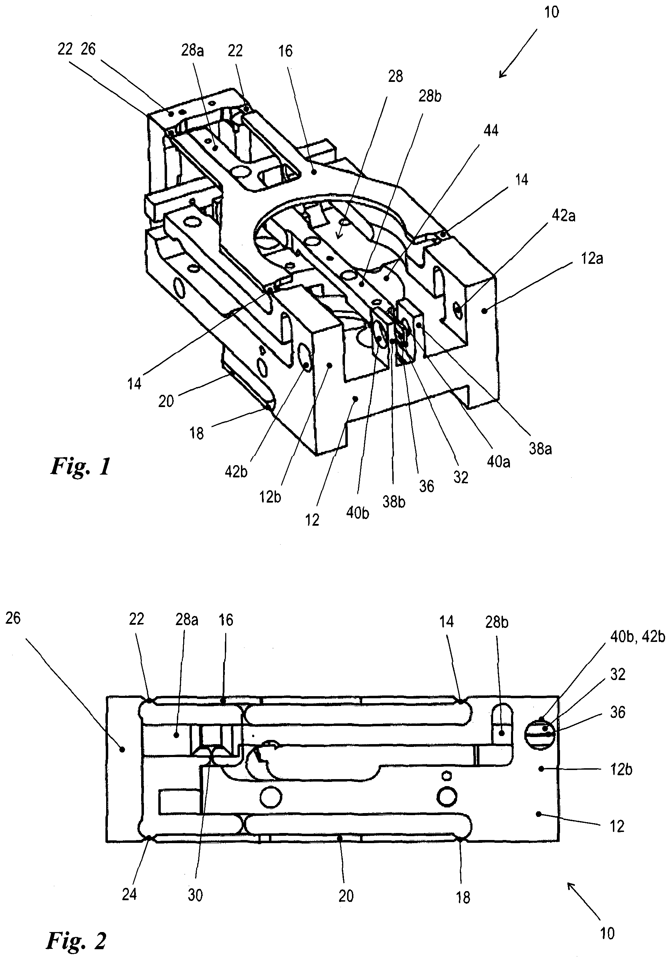

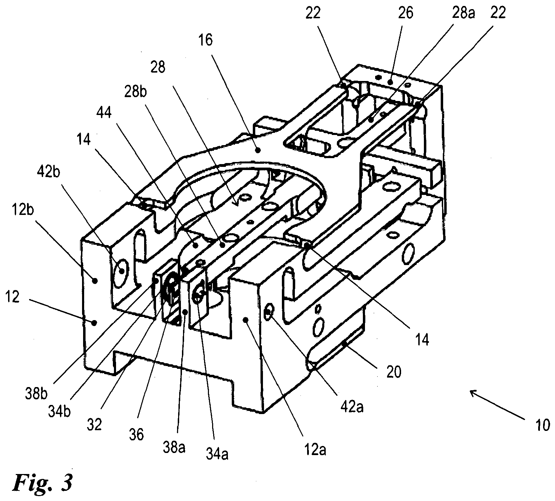

Die Figuren 1 und 2 zeigen eine Ausführungsform eines erfindungsgemäßen Wägesystems 10 in monolithischer Bauweise. Figur 3 zeigt das gleiche monolithische Wägesystem 10, welches um einen Lagesensor erweitert wurde. Eine weitergehende Erweiterung, insbesondere durch Hinzufügung einer Kraftkompensationsanordnung, einer geeigneten Elektronik, einer Waagschale und eines Gehäuses würde in letzter Konsequenz zur Schaffung einer anwendungsbereiten Waage führen. Die Figuren 1 bis 3 sollen daher nachfolgend gemeinsam beschrieben werden, sofern nicht im Einzelfall ausdrücklich Bezug auf eine spezielle Darstellung genommen wird.

Das Wägesystem 10 ist monolithisch gestaltet, d.h. einstückig aus einem Materialblock herausgearbeitet. Bevorzugt verwendet man hierzu einen möglichst spannungsfrei gefertigten Aluminiumblock. Die Bearbeitung erfolgt vorwiegend mechanisch, insbesondere durch Fräsen und Bohren, vorzugsweise unter dem Einsatz programmierter CNC-Maschinen.

Das Wägesystem 10 weist eine Basis 12 auf, die einen festen Bezugspunkt bzgl. sämtlicher Bewegungen innerhalb des Wägesystems 10 darstellt. Über erste Dünnstellen 14 ist ein Oberlenkerpaar 16 an der Basis 12 angelenkt. Über zweite Dünnstellen 18 ist ein Unterlenkerpaar 20 an der Basis 12 angelenkt. Das Oberlenkerpaar 16 und das Unterlenkerpaar 20 sind über dritte Dünnstellen 22 bzw. über vierte Dünnstellen 24, die lediglich in Figur 2 erkennbar sind, an einer Lastaufnahme 26 angelenkt. Durch diese Parallellenkeranordnung wird eine - zumindest bei kleinen Auslenkungen - rein vertikale Bewegung der Lastaufnahme 26 relativ zur Basis 12 ermöglicht. In einer das Wägesystem 10 enthaltenden Waage ist die Lastaufnahme 26 mit einer Gewichtsaufnahme, insbesondere einer Waagschale verbunden, sodass eine zu messende Gewichtskraft über die Lastaufnahme 26 in das Wägesystem 10 eingeleitet wird.

Die Lastaufnahme 26 ist über eine in den Figuren nicht im Detail erkennbare Kopplung mit einer Hebelanordnung zur Übersetzung, beim gezeigten Ausführungsbeispiel insbesondere zur Verstärkung der Auslenkung der Lastaufnahme 26 verbunden. Details der Hebelanordnung und seiner Kopplung mit der Lastaufnahme 26 sind für die vorliegende Erfindung nicht von Belang. Von Bedeutung ist lediglich der endständige Hebel 28, der funktional in einen kurzen Hebelarm 28a und einen langen Hebelarm 28b unterteilbar ist und an deren Berührungspunkt auf einer Stützpunktdünnstelle 30 schwenkbar gelagert ist. Eine Auslenkung der Lastaufnahme 26 wird, je nach Ausführungsform der Hebelanordnung, mittelbar oder unmittelbar auf den kurzen Hebelarm 28a übertragen und führt zu einer entsprechend verstärkten Auslenkung des langen Hebelarms 28b. Am freien Ende des langen Hebelarms 28b ist ein Targetbereich 32 für einen weiter unten detaillierter beschriebenen Lagesensor 34 angeordnet. Der Targetbereich 32 besteht aus einem dünnwandigen Hebelabschnitt, der eine Schwenkbewegung in der Auslenkungsebene des Hebels 28 vollführt und eine Schlitzblende 36 senkrecht hierzu aufweist.

Wie in Figur 3 angedeutet, besteht der Lagesensor 34 aus einem Fotoemitter 34a und einem Fotodetektor 34b. Diese sind so angeordnet, dass Licht des Fotoemitters 34a auf seinem Weg zum Fotodetektor 34b die Schlitzblende 36 des Targetbereichs 32 durchstrahlt. Bei geeigneter Ausgestaltung des Fotodetektors, beispielsweise als geteilte Fotodiode, lassen sich so Auslenkungen des langen Hebelarms 28b sehr präzise detektieren.

Zur Halterung des Lagesensors 34 sind beiderseits des Targetbereichs 32 Sockel 38a, 38b angeordnet, die erfindungsgemäß einstückig mit der Basis verbunden, insbesondere Bestandteil des monolithischen Wägesystems 10 sind. Die Sockel 38a, 38b weisen jeweils eine Sockeldurchbrechung 40a, 40b auf, die miteinander und - bei nicht-ausgelenkter Position des Hebels 28 - mit der Schlitzblende 36 des Targetbereichs 32 fluchten. Diesen Sockeldurchbrechungen 40a, 40b kommt eine Doppelfunktion zu, nämlich zum einen zur Halterung, insbesondere durch Einsetzen der Elemente des Lagesensors 34, sowie als Bearbeitungsfenster für eine Laserbearbeitung des Targetbereichs 32. Lässt sich die Dünnwandigkeit des Targetbereichs 32 noch durch mechanische Bearbeitung, insbesondere durch Fräsen, erreichen, so ist das Einbringen der Schlitzblende 36 in den Targetbereich 32 aufgrund der durch die monolithischen Sockel 38a, 38b bedingten räumlichen Enge mittels mechanischer Bearbeitung nicht mehr möglich. Erfindungsgemäß ist daher vorgesehen, die Schlitzblende 36 durch Laserbearbeitung durch die Bearbeitungsfenster 40a, 40b hindurch zu gestalten.

Bei der gezeigten Ausführungsform ist die Basis 12 im Querschnitt H-förmig ausgestaltet und weist insbesondere Seitenwände 12a, 12b auf, zwischen denen die Sockel 38a, 38b und der zwischen ihnen liegende Targetbereich 32 angeordnet sind. Grundsätzlich ist es zwar möglich, den zur Laserbearbeitung des Targetbereichs 32 benötigten Laserstrahl durch Anordnung eines Umlenkspiegels im Zwischenraum zwischen den Sockeln 38a, 38b und den Seitenwänden 12a bzw. 12b der Basis 12 durch die Sockeldurchbrechungen 40a, 40b einzuspiegeln. Bei der gezeigten Ausführungsform hingegen sind die Seitenwände 12a, 12b ihrerseits mit Basisdurchbrechungen 42a, 42b versehen, die mit den Sockeldurchbrechungen 40a, 40b fluchten. Bevorzugt wird der zur Bearbeitung des Targetbereichs 32 benötigte Laserstrahl somit durch wenigstens zwei Bearbeitungsfenster, nämlich durch Sockeldurchbrechung 40a, 40b und Basisdurchbrechung 42a, 42b eingeleitet. Der Fachmann wird erkennen, dass eine einseitige Einleitung des Laserstrahls in der Regel hinreichend sein wird. Bevorzugt wird hierzu das größere Bearbeitungsfensterpaar gewählt, d.h. im gezeigten Ausführungsbeispiel das Bearbeitungsfensterpaar aus Sockeldurchbrechung 40b und Basisdurchbrechung 42b, deren Fluchten miteinander und mit der Schlitzblende 36 insbesondere in Figur 2 deutlich erkennbar ist.

Die Herstellung jedes der beiden Paare von Bearbeitungsfenstern, jeweils umfassend eine Sockeldurchbrechung 40a, 40b und eine Basisdurchbrechung 42a, 42b, erfolgt bevorzugt in einem gemeinsamen Bohrschritt.

In den Figuren 1 und 3 nur rudimentär angedeutet, ist ein Aufnahmebereich 44 der Basis 12 zur Aufnahme einer Kraftkompensationsanordnung, insbesondere zur Aufnahme eines Permanentmagneten, in dessen Magnetfeld eine mit dem langen Hebelarm 28b gekoppelte Tauchspule zur elektromagnetischen Kraftkompensation der über die Lastaufnahme 26 eingeleiteten Gewichtskraft eintaucht.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum von Variationsmöglichkeiten an die Hand gegeben. Insbesondere ist der Fachmann frei in der speziellen geometrischen Gestaltung der Parallellenkeranordnung sowie der Hebelanordnung des erfindungsgemäßen monolithischen Wägesystems 10.

### Bezugszeichenliste

- 10: Wägesystem
- 12: Basis
- 12a,b: Seitenwände von 12
- 14: erste Dünnstellen
- 16: Oberlenkerpaar
- 18: zweite Dünnstellen
- 20: Unterlenkerpaar
- 22: dritte Dünnstellen
- 24: vierte Dünnstellen
- 26: Lastaufnahme
- 28: Hebel
- 28a: kurzer Arm von 28
- 28b: langer Arm von 28
- 30: Stützpunktdünnstelle
- 32: Targetbereich
- 34: Lagesensor
- 34a: Fotoemitter
- 34b: Fotodetektor
- 36: Schlitzblende
- 38a,b: Sockel
- 40a,b: Sockeldurchbrechung
- 42a,b: Basisdurchbrechung
- 44: Magnetaufnahme

## Patentansprüche

1. Monolithisches Wägesystem, umfassend eine Basis (12), eine über eine Parallellenkeranordnung (16, 20) an der Basis (12) angelenkte Lastaufnahme (26) und ein an der Lastaufnahme (26) angelenkter Hebel (28), welcher eine Ansatzstelle für eine Kraftkompensationsanordnung und einen Targetbereich (32) für einen optischen Lagesensor (34) aufweist,
wobei der Targetbereich (32) eine Schlitzblende (36) in einem dünnwandigen Hebelabschnitt des Hebels (28) in dessen Auslenkungsebene aufweist,
**dadurch gekennzeichnet,**
**dass** horizontal benachbart zu dem Targetbereich (32) ein einstückig mit der Basis (12) verbundener Lagesensorsockel (38a,b) angeordnet ist, der mit einer senkrecht zur Auslenkungsebene ausgerichteten Sockeldurchbrechung (40a,b) versehen ist, wobei die Schlitzblende (36) des Targetbereichs (32) mittels Laserbearbeitung durch die Sockeldurchbrechung (40a,b) hindurch geschaffen ist

2. Monolithisches Wägesystem nach Anspruch 1,
**dadurch gekennzeichnet,**
**dass** benachbart zu dem die Sockeldurchbrechung (40a,b) tragenden Lagesensorsockel (38a,b) eine Seitenwand (12a,b) der Basis (12) angeordnet ist, welche eine die Sockeldurchbrechung (40a,b) überlappende Basisdurchbrechung (42a,b) aufweist,
wobei die Schlitzblende (36) des Targetbereichs (32) mittels Laserbearbeitung durch die Basisdurchbrechung (42a,b) hindurch geschaffen ist.

3. Monolithisches Wägesystem nach einem der vorangehenden Ansprüche,
**dadurch gekennzeichnet,**
**dass** beidseitig des Targetbereichs (32) je ein Lagesensorsockel (38a,b) mit einer Sockeldurchbrechung (40a,b) angeordnet ist und die Sockeldurchbrechungen (40a,b) und der Targetbereich (32) miteinander fluchten.

4. Monolithisches Wägesystem nach Anspruch 3,
**dadurch gekennzeichnet,**
**dass** die Lagesensorsockel (38a,b) zwischen zwei Seitenwänden (12a,b) der Basis (12) angeordnet sind, welche jeweils eine die nächstliegende Sockeldurchbrechung (40a,b) überlappende Basisdurchbrechung (42a,b) aufweist.

5. Monolithisches Wägesystem nach einem der Ansprüche 3 bis 4,
**dadurch gekennzeichnet,**
**dass** in eine Sockeldurchbrechung (40a) eines ersten der beiden Lagesensorsockel (38a) ein auf den Targetbereich (32) ausgerichteter Fotoemitter (34a) und in eine Sockeldurchbrechung (40b) eines zweiten der beiden Lagesensorsockel (38b) ein auf den Targetbereich (32) ausgerichteter Fotodetektor (34b) eingesetzt ist.

## Claims

1. Monolithic weighing system comprising a base (12), a load pick-up (26) articulated to the base (12) by way of a parallel guide arrangement (16, 20) and a lever (28), which is articulated to the load pick-up (26) and which has an attachment point for a force compensation arrangement and a target region (32) for an optical position sensor (34), wherein the target region (32) comprises a slot aperture (36) in a thin-walled lever section of the lever (28) in the deflection plane thereof,
**characterised in that**
a position sensor pedestal (38a, b), which is integrally connected with the base (12) and which is provided with a pedestal passage (40a, b) oriented perpendicularly to the plane of deflection, is arranged horizontally adjacent to the target region (32), wherein the slot aperture (36) of the target region (32) is created by means of laser processing through the pedestal passage (40a, b).

2. Monolithic weighing system according to claim 1, **characterised in that** a side wall (12a, b), which has a base passage (42a, b) overlapping the socket passage (40a, b), of the base (12), is arranged adjacent to the position sensor pedestal (30a, b) having the pedestal passage (40a, b), wherein the slot aperture (36) of the target region (32) is created by means of laser processing through the base passage (42a, b).

3. Monolithic weighing system according to one of the preceding claims, **characterised in that** a respective position sensor pedestal (38a, b) with a pedestal passage (40a, b) is arranged on either side of the target region (32) and the pedestal passages (40a, b) and the target region (32) are in alignment with one another.

4. Monolithic weighing system according to claim 3, **characterised in that** the position sensor pedestals (38a, b) are arranged between two side walls (12a, b) of the base (12), each side wall having a base passage (42a, b) overlapping the closer pedestal passage (40a, b).

5. Monolithic weighing system according to one of claims 3 and 4, **characterised in that** a photo emitter (34a) oriented onto the target region (32a) is inserted into a pedestal passage (40a) of a first one of the two position sensor pedestals (38a) and a photo detector (34b) oriented onto the target region (32) is inserted into a second one of the two position sensor pedestals (38b).

## Revendications

1. Système de pesée monolithique, comprenant une base (12), un support de charge (26) articulé à la base (12) au moyen d'un mécanisme à bras parallèles (16, 20) et un levier (28) qui est articulé sur le support de charge (26) et qui comporte un point d'application pour un mécanisme de compensation de force et une zone cible (32) destinée à un capteur de position optique (34),
dans lequel la zone cible (32) comprend un diaphragme à fente (36) dans une section de levier à parois minces du levier (28) dans le plan de déviation de ce dernier,
**caractérisé en ce que**
un socle de capteur de position (38a, b) relié d'une seule pièce à la base (12), qui est pourvu d'un évidement de socle (40a, b) orienté perpendiculairement au plan de déviation, est agencé horizontalement au voisinage de la zone cible (32), dans lequel le diaphragme à fente (36) de la zone cible (32) est réalisé par usinage laser à travers l'évidement de socle (40a, b).

2. Système de pesée monolithique selon la revendication 1,
**caractérisé en ce que**
une paroi latérale (12a, 12b) de la base (12), laquelle présente un évidement de base (42a, b) recouvrant l'évidement de socle (40a, b), est agencée au voisinage du socle de capteur de position (38a, b) portant l'évidement de socle (40a, b),
dans lequel le diaphragme à fente (36) de la zone cible (32) est réalisé par usinage laser à travers l'évidement de base (42a, b).

3. Système de pesée monolithique selon l'une quelconque des revendications précédentes,
**caractérisé en ce que**
respectivement un socle de capteur de position (38a, b) pourvu d'un évidement de socle (40a, b) est agencé de part et d'autre de la zone cible (32) et les évidements de socle (40a, b) et la zone cible (32) sont en alignement les uns avec les autres.

4. Système de pesée monolithique selon la revendication 3,
**caractérisé en ce que**
les socles de capteur de position (38a, b) sont agencés entre deux parois latérales (12a, b) de la base (12), laquelle comprend dans chaque cas un évidement de base (42a, b) recouvrant l'évidement de socle (40a, b) le plus proche.

5. Système de pesée monolithique selon l'une quelconque des revendications 3 à 4,
**caractérisé en ce que**
un photoémetteur (34a) orienté vers la zone cible (32) est inséré dans un évidement de socle (40a) d'un premier des deux socles de capteur de position (38a) et un photo-détecteur (34b) orienté vers la zone cible (32) est inséré dans un évidement de socle (40b) d'un deuxième des deux socles de capteur de position (38b).
